# EUROPEAN PATENT APPLICATION

(11) **EP 2 148 292 A1**
(43) Date of publication of application: **27.01.2010**
(21) Application number: 09008271.0
(22) Date of filing: 24.06.2009
(51) Int. Cl.: G06N 5/02, G06Q 10/00

(54) **Business event agents**

(30) Priority: 25.07.2008 US 179730
(71) Applicant: SAP AG, 69190 Walldorf (DE)
(72) Inventor: Bäuerle, Stefan, A., 69190 Walldorf (DE); Getzner, Robert, 69190 Walldorf (DE); Meinert, Holger, 69190 Walldorf (DE); Weber, Franz, 69190 Walldorf (DE)
(74) Representative: Müller-Boré & Partner Patentanwälte

(57) **Abstract**

A system may include reception of a core event associated with a business object, evaluation of one or more rules based on the core event to identify a business event, construction of a message based on a mapping between the business object and an event interface, the mapping and the event interface associated with the business event and the business object; and publication of the message.

## Description

### FIELD

Some embodiments relate to communication mechanisms of a business process platform. In particular, some embodiments concern the identification of business events and/or the publication of business events within a business process platform.

### BACKGROUND

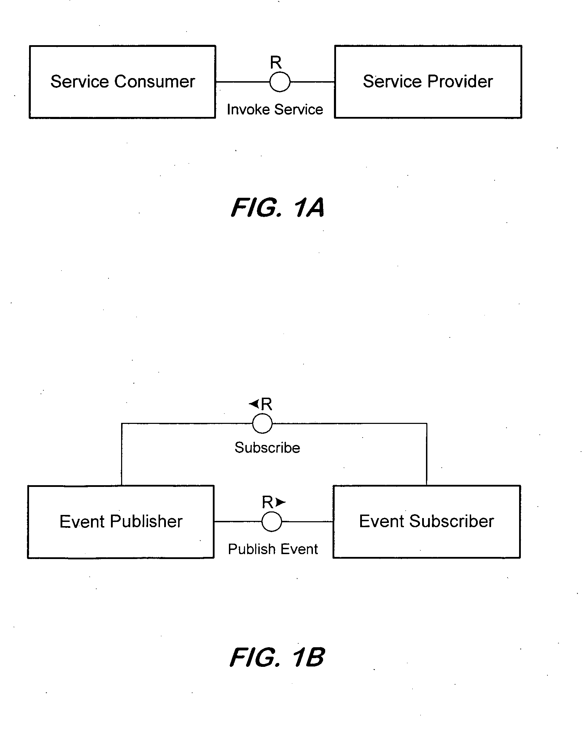

FIGS. 1A and 1B illustrate two conventional communication paradigms. According to the service paradigm of FIG. 1A, a service consumer invokes a service interface of a service provider to fulfill a desired task. In contrast, an event publisher, as shown in FIG. 1B, publishes an event according to a subscription which has been pre-established by an event subscriber. The event subscriber receives the published event and reacts in any desired manner. Unlike the relationship between the service consumer and the service provider, the event publisher need not be aware of the event subscriber, nor the intentions or semantics of the event subscriber.

Some conventional business process platforms provide "agents" (e.g. process agents, task agents, etc.) which may subscribe to core events (e.g., creation, change, delete) of a business object. For example, an agent may subscribe to a particular type of business object (e.g., PurchaseOrder) or to a particular instance of a business object (e.g., PurchaseOrder(4711)). The agent is therefore notified of core events associated with business objects of the particular type (or instance).

The "change" core event typically does not provide rich business semantics (e.g., a detailed indication of the particular change). These events are therefore not particularly useful to an entity other than the entity which caused the change core event to occur. Accordingly, after being notified of a change core event, a conventional process agent determines a logical receiver for an outgoing message relating to the change core event, determines the business semantics of the logical receiver, determines the semantics of the message, and assembles the message according to the semantics.

Improved systems for identifying semantically-rich events within a business process platform and for providing these events within and without the business process platform are desired.

### BRIEF DESCRIPTION OF THE DRAWINGS

FIG. 1A is a block diagram of a service architecture.
FIG. 1B is a block diagram of a publish/subscribe architecture.
FIG. 2 is a block diagram of an architecture providing an event agent according to some embodiments.
FIG. 3 is a flow diagram of a process according to some embodiments.
FIG. 4 is a detailed block diagram of a system according to some embodiments.
FIG. 5 is a detailed block diagram of a system according to some embodiments.
FIG. 6 is a view of a user interface for defining an event agent according to some embodiments.
FIG. 7 is a view of a user interface for creating rules associated with an business event according to some embodiments.
FIG. 8 is a view of a user interface for creating a mapping between a business object and an event interface according to some embodiments.
FIG. 9 is a view of a user interface for associating a business event with a mapping according to some embodiments.
FIG. 10 is a view of a user interface for defining a subscription associated with a business event according to some embodiments.

### DETAILED DESCRIPTION

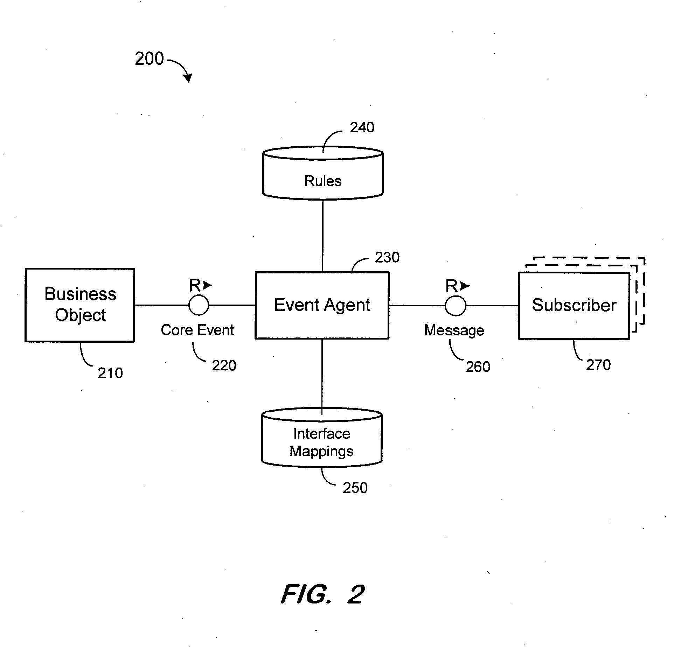

FIG. 2 is a block diagram of system 200 according to some embodiments. System 200 includes business object 210. Business object 210 may comprise business logic and/or data having any suitable structure. Business object 210 may encapsulate data received from back-end systems (not shown).

Business object 210 is associated with one or more core events. Such core events may include, but are not limited to, creation, change, and deletion events. As discussed above with respect to conventional implementations, event agent 230 of system 200 may subscribe to core event 220 of business object 210. Core event 220 may comprise a change core event.

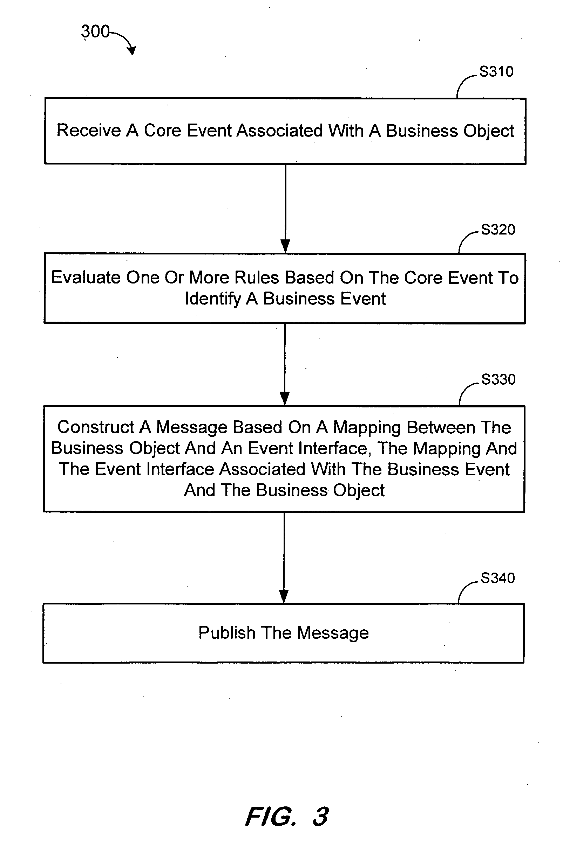

According to some embodiments, event agent 230 executes process 300 of FIG. 3. Event agent 230, business object 210, and all other entities discussed herein may be embodied in program code stored on one or more computer-readable media. Such media may include, for example, a floppy disk, a CD-ROM, a DVD-ROM, a Zip™ disk, magnetic tape, and solid state RAM or ROM memories. Embodiments are therefore not limited to any specific combination of hardware and software.

At S31 0, a core event associated with a business object is received. As described above and illustrated in FIG. 2, event agent 230 may receive core event 220 at S310. Core event 220 might not be received directly from business object 210 as illustrated, but may be provided to event agent by a subscription/registration mechanism. More particularly, event agent 230 may be associated with core event 220 of business object 210 via a subscription or other form of registration.

Next, at S320, one or more rules are evaluated based on the received core event to identify a business event. In some embodiments of S320, event agent 230 receives the one or more rules from rules storage 240. The one or more rules may be associated with business object 210.

Rules 240 may semantically enrich the received core event. For example, each of rules 240 is associated with a business event, and specifies one or more characteristics of a business process platform in which system 200 is disposed. If each of the one or more characteristics is true, then event agent 230 determines at S320 that the business event associated with that rule has occurred. The one or more characteristics may relate to states and/or values of a business object, including but not limited to business object 210, internal and/or external messages, and any other detectable condition.

A message is constructed at S330 based on a mapping between the business object and an event interface. The mapping and the event interface are associated with the identified business event and with the business object of S310.

According to some embodiments, event agent 230 determines the mapping from interface mappings 250. Interface mappings 250 may therefore store a mapping between business object 210 and an event interface. The event interface may be generic to all business objects, may be specific to business object 210, or may be specific to business object 210 and to the identified business event.

The message is then published at S340. As illustrated in FIG. 2, publication of message 260 results in reception of message 260 by one or more subscribers 270. Event agent 230 may provide message 260 to a publication/subscription infrastructure which, based on predefined subscriptions, provides message 260 to one or more subscribers 270.

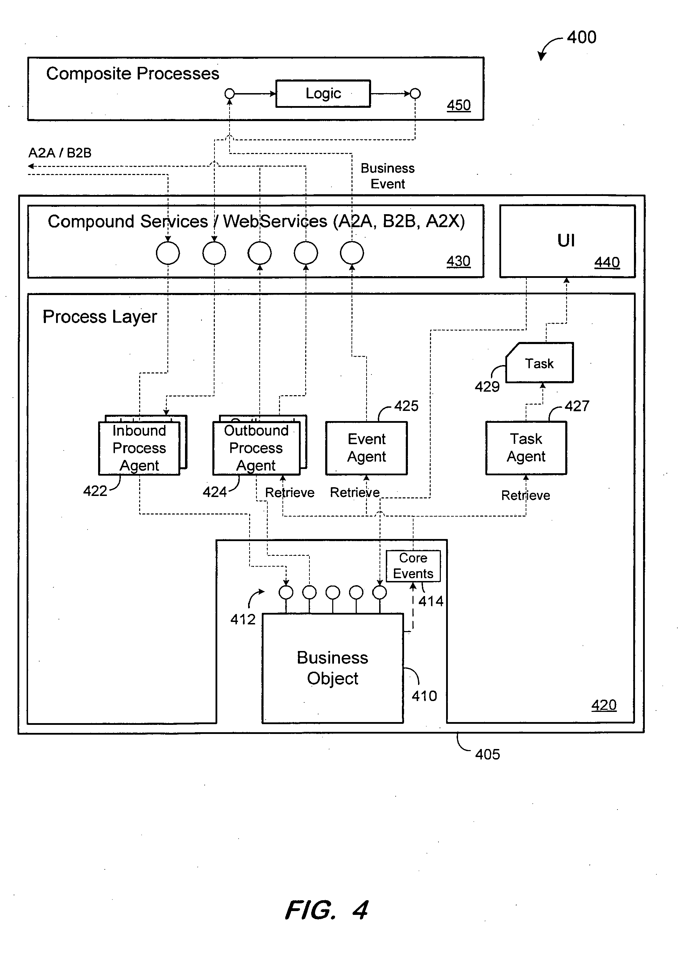

FIG. 4 illustrates architecture 400 including business process platform 405 according to some embodiments. Business process platform 405 may comprise an SAP application platform based on SAP Netweaver®. Architecture 400 may implement system 200 and process 300 described above, but is not limited to either.

Although only business object 410 is shown, business process platform 405 may include many business objects with which agents may interact to execute business processes. In this regard, process layer 420 includes inbound process agents 422, outbound process agents 424, event agent 425 and task agent 427. Process layer 420 may include other types of agents according to some embodiments.

Inbound process agents 422 implement message interfaces of services 430 by communicating with services or methods 412 exposed by business object 410. In response, business object 410 experiences one or more core events 414. As described in the Background, a corresponding one of outbound process agents 424 is notified of a core event 414, determines a logical receiver for an outgoing message relating to the core event, determines the business semantics of the logical receiver, determines the semantics of the message, and assembles the message according to the semantics. The message is then delivered to the logical receiver.

Event agent 425 may also receive one of core events 414 associated with business object 410. As described with respect to process 300, event agent 425 may then evaluate one or more rules based on the core event to identify a business event, and construct a message based on a mapping between the business object and an event interface, where the mapping and the event interface associated with the business event and the business object. Event agent 425 may then publish the message, for example, by forwarding the message to a publish/subscribe infrastructure (not shown).

Event agent 425 does not require a relevance condition because event agent 425 is not concerned with message choreography in some embodiments. Outbound process agents 424, in contrast, handle lifecycle-independent checks in the relevance condition to structure and optimize condition evaluation logic for message choreography. Outbound process agents 424 also structure message choreography and communication status via start-, change-, cancel-, and delete-conditions. Since event agent 425 is not concerned with message choreography, event agent 425 need only be concerned with change-conditions in some embodiments.

Outbound process agents 424 are defined for a dedicated business process purpose. In other words, outbound process agents 424 expect a certain functionality on the receiver side and is aware of the receiver's process logic. Since messages constructed by event agent 425 are published, event agent 425 does not need to know about the semantics or process logic of the receiver.

FIG. 4 shows consumption of a business event by composite processes 450. Composite processes 450 are thereby efficiently notified of semantically-rich changes to the application logic of business process platform 405. An output of composite processes 450 resulting from the business event comprises a service call to one of services 430 of application platform 405, but embodiments are not limited thereto.

User interface 440 may comprise a software application that communicates with business process platform 405 via proprietary interfaces. In some embodiments, user interface 440 may comprise a Web browser executed by a client device. The Web browser may include an execution engine to execute code (e.g., JAVA® code or Flash® code) to provide secure communication with business process platform 405.

Task agent 427 may respond to service requests of UI 440. Such responses may require task agent 427 to register with business object 410 to receive core events 414. Task agent 427 may complete a service request of UI 440 based on a received core event 414 and task information 429.

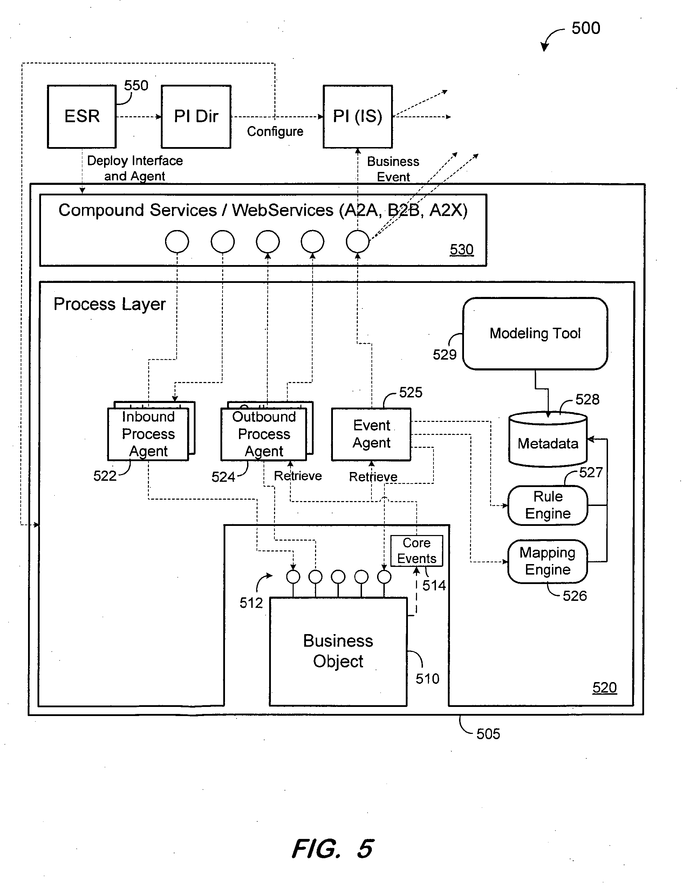

FIG. 5 illustrates architecture 500 including business process platform 505 according to some embodiments. Business process platform 505 may comprise an SAP application platform based on SAP Netweaver®, and architecture 500 may implement system 200 and process 300 described above, but is not limited to either.

The elements of architecture 500 may be implemented as described above with respect to similarly-numbered elements of FIG. 4. Architecture 500, however, includes mapping engine 526, rule engine 527, metadata 528 and modeling tool 529, counterparts of which are not illustrated in FIG. 4.

Elements 526-529 may be used to define and utilize the rules, mappings and interfaces described herein. More particularly, after receiving a core event 514 associated with business object 510, event agent 525 may utilize rule engine 527 to evaluate one or more rules stored in metadata 528 in order to identify a business event. After a business event is identified, event agent 525 may utilize mapping engine 526 to construct a message based on a mapping between the business object and an event interface. The mapping and the event interface are stored in metadata 528 in association with the business event and the business object.

Modeling tool 529 may comprise a design time environment including editors to specify (or generate) event interfaces, to define rules, and to define mappings between a business object and an event interface. Editors may also allow subscription to a business event message. A subscription may specify an event consumer, an event interface, a business event, and a business object. Other tools may be used to specify the event interfaces, rules, mappings, and subscriptions in some embodiments.

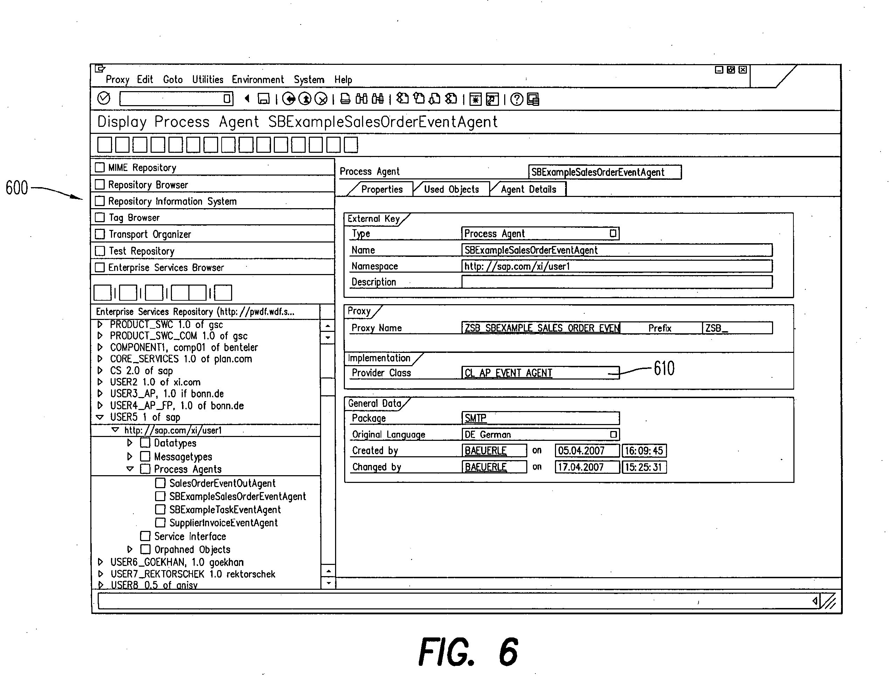

FIGS. 6 through 10 comprise user interfaces of modeling tool 529 according to some embodiments. The user interfaces may be used to provide modeling data to metadata 528. The user interfaces may be displayed by any suitable device. For example, the device may include any necessary software to support the aforementioned proprietary interfaces (e.g., a proprietary client application) or execution engine (e.g., a Web browser). A device to display the user interfaces is capable of communication (including sporadic communication - e.g., mobile devices) with the business process platform.

Prior to modeling an event agent, the event agent and an event interface may be defined in enterprise services repository 550 and corresponding proxies may be generated. In some embodiments, the event interface and its proxy are created during modeling of the event and the event agent. The event interface proxy may be generated without additional manual steps. FIG. 6 illustrates user interface 600 to generate an event agent proxy according to some embodiments.

A generic service provider class name is entered in provider class field 610. This class may comprise a generic implementation of an event agent that executes the modeled information (i.e., rules, mappings, interfaces) at runtime and indicates that this particular process agent is an event agent. According to some embodiments, an agent may be defined as an event agent by inputting "event agent" in type field 620.

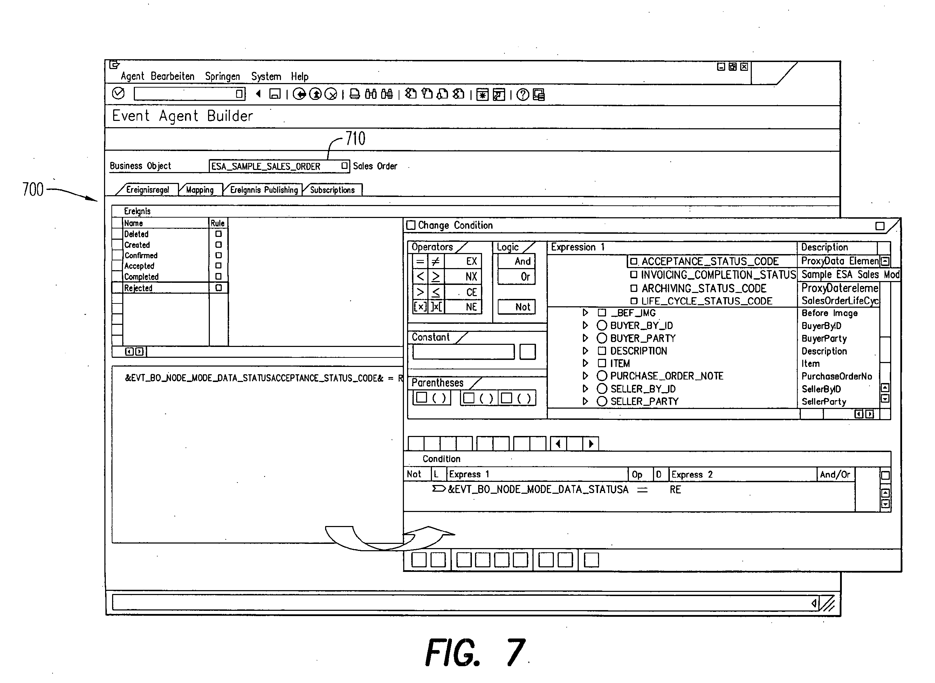

FIG. 7 illustrates user interface 700 to define a business event. Definition of a business event may comprise defining a rule which, if true, indicates the occurrence of the business event. The business event is associated with the business object specified in field 710, and the rule definition is a Boolean condition using arbitrary expressions on the business object and its context as well as different operators.

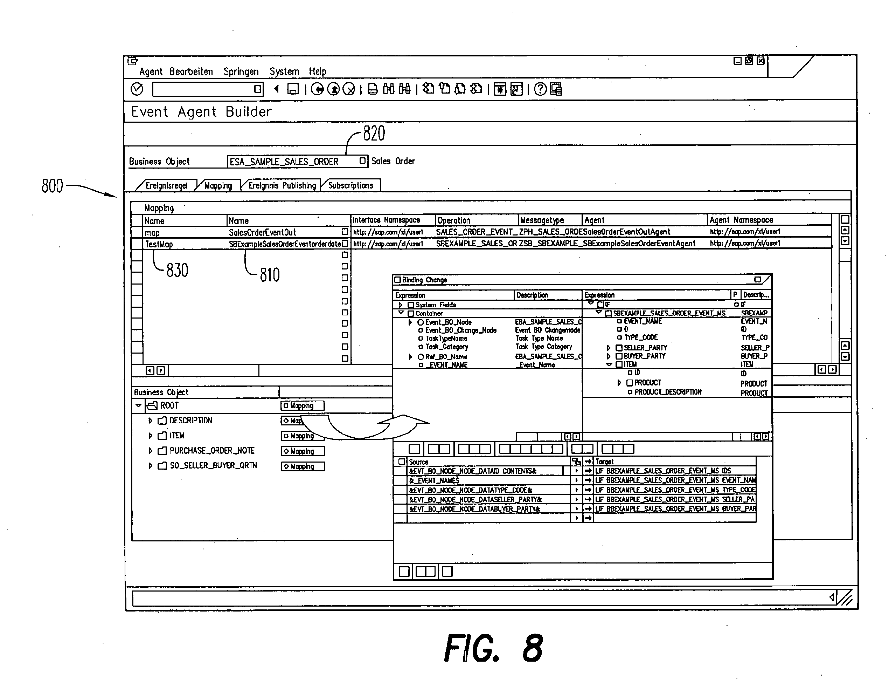

User interface 800 of FIG. 8 may be used to define a mapping between the business object and the event interface. The mapping is associated with the business event defined in user interface 700. That is, the defined mapping is used to construct a message compliant with the event interface if the defined business event is determined to occur.

Interface 800 shows two separate event interfaces 810 for selected business object 820. Each of event interfaces 810 corresponds to at least one business event (i.e., rule) associated with business object 820. Interface 800 also shows different mappings 830 for each event interface 810.

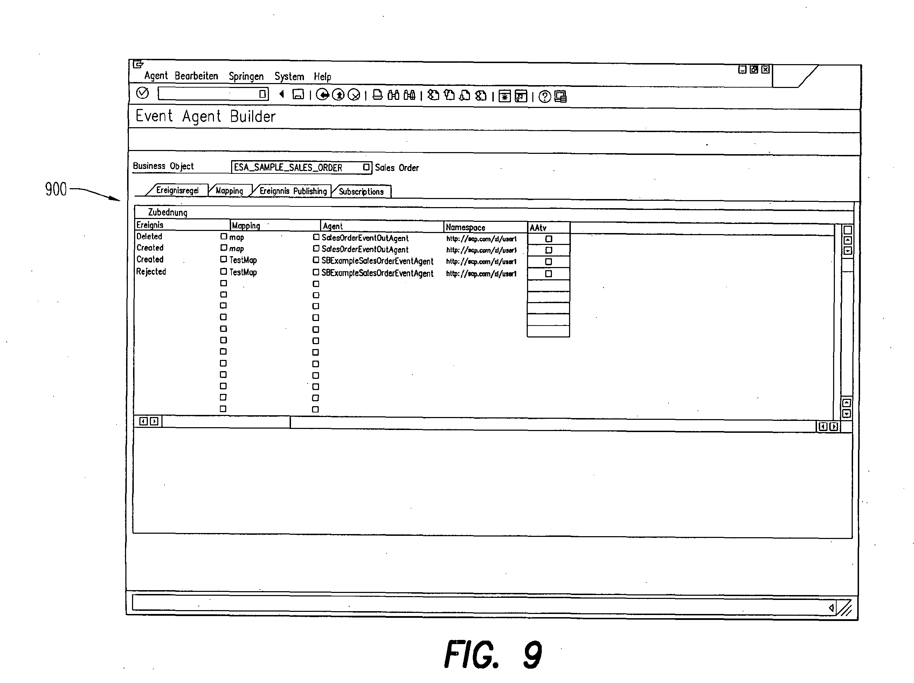

User interface 900 of FIG. 9 allows the assignment of event rules to mappings. Interface 900 shows two event rules, "deleted" and "rejected", assigned to two different interfaces (mappings). Moreover, the event rule "created" is assigned to both interfaces (mappings). In some embodiments, only those rules which will be evaluated at runtime are assigned to a mapping in interface 900.

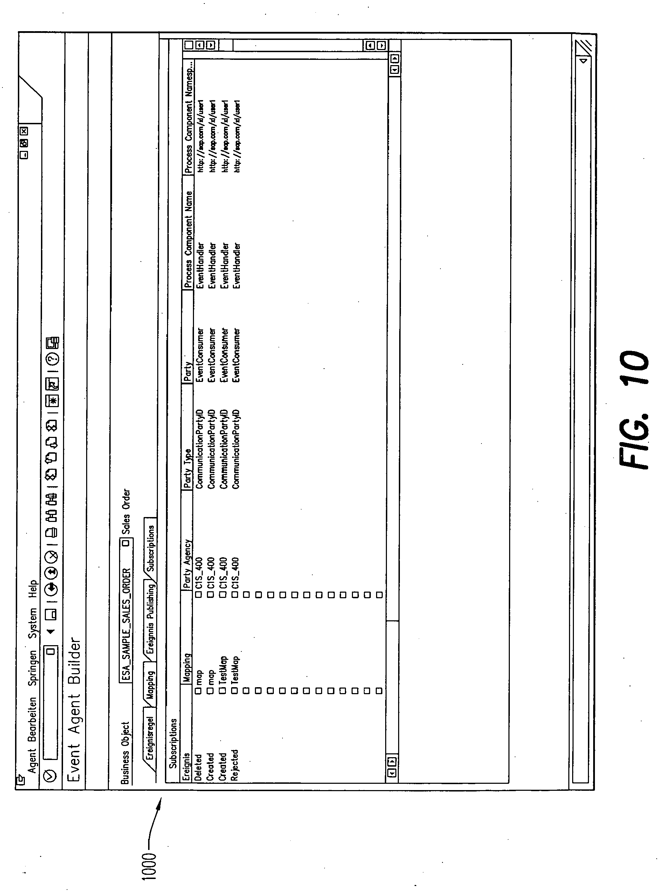

User interface 1000 of FIG. 10 shows a receiver ("Party") associated with each rule. Since each rule is associated with a single business event, interface 1000 indicates business event subscriptions. A receiver subscribed to a business event will receive messages associated with the business event. The messages may be received from a publication/subscription infrastructure. As illustrated in FIG. 5, the receiver may comprise an SAP Process Integration (PI) layer which forwards the message to another consumer. The receiver (subscriber) may comprise any technical infrastructure (e.g., any WebService Provider) according to some embodiments.

Elements described herein as communicating with one another are directly or indirectly capable of communicating over any number of different systems for transferring data, including but not limited to shared memory communication, a local area network, a wide area network, a telephone network, a cellular network, a fiber-optic network, a satellite network, an infrared network, a radio frequency network, and any other type of network that may be used to transmit information between devices. Moreover, communication between systems may proceed over any one or more transmission protocols that are or become known, such as Asynchronous Transfer Mode (ATM), Internet Protocol (IP), Hypertext Transfer Protocol (HTTP) and Wireless Application Protocol (WAP).

The embodiments described herein are solely for the purpose of illustration. Those in the art will recognize other embodiments may be practiced with modifications and alterations limited only by the claims.

Summarizing, a preferred embodiment may relate to a computer-implemented event processing method, the method comprising:
receiving a core event associated with a business object;
evaluating one or more rules based on the core event to identify a business event;
constructing a message based on a mapping between the business object and an event interface, the mapping and the event interface associated with the business event and the business object; and
publishing the message.

Preferably, according to the event processing method, the core event comprises a change condition.

The event processing method may further comprise:
receiving a second core event associated with a second business object;
evaluating one or more rules based on the second core event to identify a second business event;
constructing a second message based on a second mapping between the second business object and the event interface, the second mapping and the event interface associated with the second business event and the second business object; and
publishing the second message.

The event processing method may also comprise
receiving a second core event associated with the business object;
evaluating the one or more rules based on the second core event to identify a second business event;
constructing a second message based on a second mapping between the business object and the event interface, the second mapping and the event interface associated with the business object and the second business event; and
publishing the second message.

In addition, the event processing method may comprise:
receiving a second core event associated with a second business object;
evaluating one or more rules based on the second core event to identify a second business event;
constructing a second message based on a second mapping between the second business object and a second event interface, the second mapping and the second event interface associated with the second business event and the second business object; and
publishing the second message.

Furthermore, the event processing method may comprise:
receiving a third core event associated with the business object;
evaluating the one or more rules based on the third core event to identify a third business event;
constructing a third message based on a third mapping between the business object and the event interface, the third mapping and the event interface associated with the business object and the third business event; and
publishing the third message.

Moreover, the event processing method may comprise:
receiving a third core event associated with the business object;
evaluating the one or more rules based on the third core event to identify a third business event;
constructing a third message based on a third mapping between the business object and a third event interface, the third mapping and the third event interface associated with the business object and the third business event; and
publishing the third message.

Preferably, the event processing method comprises:
receiving a second core event associated with the business object;
evaluating one or more rules based on the second core event to identify a second business event;
constructing a second message based on a second mapping between the business object and a second event interface, the second mapping and the second event interface associated with the second business event and the business object; and
publishing the second message.

In addition, according to the event processing method, publishing the message preferably comprises:
forwarding the message to a publish/subscribe infrastructure.

Accordingly, a preferred embodiment may also relate to a medium storing processor-executable program code, the program code to provide:
an event agent to:
   receive a core event associated with a business object;
   evaluate one or more rules based on the core event to identify a business event;
   construct a message based on a mapping between the business object and an event interface, the mapping and the event interface associated with the business event and the business object; and
   publish the message.

Preferably, the core event comprises a change condition.

Furthermore, the medium may store program code to provide:
a second event agent to:
   receive a second core event associated with a second business object;
   evaluate one or more rules based on the second core event to identify a second business event;
   construct a second message based on a second mapping between the second business object and the event interface, the second mapping and the event interface associated with the second business event and the second business object; and
   publish the second message.

Preferably, the event agent is configured to:
receive a second core event associated with the business object;
evaluate the one or more rules based on the second core event to identify a second business event;
construct a second message based on a second mapping between the business object and the event interface, the second mapping and the event interface associated with the business object and the second business event; and
publish the second message.

Moreover, the medium may store program code to provide:
a second event agent to:
   receive a second core event associated with a second business object;
   evaluate one or more rules based on the second core event to identify a second business event;
   construct a second message based on a second mapping between the second business object and a second event interface, the second mapping and the second event interface associated with the second business event and the second business object; and
   publish the second message.

In addition, the medium may store program code such that the event agent is further configured to:
receive a third core event associated with the business object;
evaluate the one or more rules based on the third core event to identify a third business event;
construct a third message based on a third mapping between the business object and the event interface, the third mapping and the event interface associated with the business object and the third business event; and
publish the third message.

Moreover, the medium may store program code such that the event agent is also configured to:
receive a third core event associated with the business object;
evaluate the one or more rules based on the third core event to identify a third business event;
construct a third message based on a third mapping between the business object and a third event interface, the third mapping and the third event interface associated with the business object and the third business event; and
publish the third message.

Furthermore, the medium may store program code such that the event agent is further to:
receive a second core event associated with the business object;
evaluate one or more rules based on the second core event to identify a second business event;
construct a second message based on a second mapping between the business object and a second event interface, the second mapping and the second event interface associated with the second business event and the business object; and
publish the second message.

Preferably, the medium stores program code so that publication of the message comprises:
forwarding of the message to a publish/subscribe infrastructure.

## Claims

1. A computer-implemented event processing method, the method comprising:
receiving (S310) a core event associated with a business object;
evaluating (S320) one or more rules based on the core event to identify a business event;
constructing (S330) a message based on a mapping between the business object and an event interface, the mapping and the event interface associated with the business event and the business object; and
publishing (S340) the message.

2. A method according to Claim 1, wherein the core event comprises a change condition.

3. A method according to Claim 1 or 2, further comprising:
receiving a second core event associated with a second business object;
evaluating one or more rules based on the second core event to identify a second business event;
constructing a second message based on a second mapping between the second business object and the event interface, the second mapping and the event interface associated with the second business event and the second business object; and
publishing the second message.

4. A method according to Claim 1 or 2, further comprising:
receiving a second core event associated with the business object;
evaluating the one or more rules based on the second core event to identify a second business event;
constructing a second message based on a second mapping between the business object and the event interface, the second mapping and the event interface associated with the business object and the second business event; and
publishing the second message.

5. A method according to Claim 1 or 2, further comprising:
receiving a second core event associated with a second business object;
evaluating one or more rules based on the second core event to identify a second business event;
constructing a second message based on a second mapping between the second business object and a second event interface, the second mapping and the second event interface associated with the second business event and the second business object; and
publishing the second message.

6. A method according to Claim 5, further comprising:
receiving a third core event associated with the business object;
evaluating the one or more rules based on the third core event to identify a third business event;
constructing a third message based on a third mapping between the business object and the event interface, the third mapping and the event interface associated with the business object and the third business event; and
publishing the third message.

7. A method according to Claim 5, further comprising:
receiving a third core event associated with the business object;
evaluating the one or more rules based on the third core event to identify a third business event;
constructing a third message based on a third mapping between the business object and a third event interface, the third mapping and the third event interface associated with the business object and the third business event; and
publishing the third message.

8. A method according to Claim 1 or 2, further comprising:
receiving a second core event associated with the business object;
evaluating one or more rules based on the second core event to identify a second business event;
constructing a second message based on a second mapping between the business object and a second event interface, the second mapping and the second event interface associated with the second business event and the business object; and
publishing the second message.

9. A method according to any one of the preceding claims, wherein publishing the message comprises:
forwarding the message to a publish/subscribe infrastructure.

10. A medium storing processor-executable program code, the program code to provide:
an event agent (230) to:
receive a core event (220) associated with a business object (210);
evaluate one or more rules (240) based on the core event (220) to identify a business event;
construct a message (260) based on a mapping between the business object (210) and an event interface, the mapping and the event interface associated with the business event and the business object (210); and
publish the message (260).

11. A medium according to Claim 10, wherein the core event (220) comprises a change condition.

12. A medium according to Claim 10 or 11, the program code to provide:
a second event agent to:
receive a second core event associated with a second business object;
evaluate one or more rules based on the second core event to identify a second business event;
construct a second message based on a second mapping between the second business object and the event interface, the second mapping and the event interface associated with the second business event and the second business object; and
publish the second message.

13. A medium according to Claim 10 or 11, the event agent further to:
receive a second core event associated with the business object;
evaluate the one or more rules based on the second core event to identify a second business event;
construct a second message based on a second mapping between the business object and the event interface, the second mapping and the event interface associated with the business object and the second business event; and
publish the second message.

14. A medium according to Claim 10 or 11, the program code to provide:
a second event agent to:
receive a second core event associated with a second business object;
evaluate one or more rules based on the second core event to identify a second business event;
construct a second message based on a second mapping between the second business object and a second event interface, the second mapping and the second event interface associated with the second business event and the second business object; and
publish the second message.

15. A medium according to Claim 14, the event agent further to:
receive a third core event associated with the business object;
evaluate the one or more rules based on the third core event to identify a third business event;
construct a third message based on a third mapping between the business object and the event interface, the third mapping and the event interface associated with the business object and the third business event; and
publish the third message.
